# FASCICULE DE BREVET EUROPEEN

(11) **EP 2 516 962 B1**
(45) Date de publication et mention de la délivrance du brevet: **10.09.2014**
(21) Numéro de dépôt: 10808905.3
(22) Date de dépôt: 20.12.2010
(51) Int. Cl.: G01C 19/5607, G01C 19/5614

(54) **ÉLECTRODES ET CIRCUITS ÉLECTRONIQUES ASSOCIÉS POUR GYROMÈTRE VIBRANT PIÉZOÉLECTRIQUE.**
ELEKTRODEN UND ZUGEHÖRIGE ELEKTRONISCHE SCHALTKREISE FÜR EINEN PIEZOELEKTRISCHEN VIBRATIONSKREISEL
ELECTRODES AND ASSOCIATED ELECTRONIC CIRCUITS FOR A PIEZOELECTRIC VIBRATING GYROSCOPE

(30) Priorité: 23.12.2009 FR 0906327
(43) Date de publication de la demande: 31.10.2012
(73) Titulaire: Office National d'Etudes et de Recherches Aérospatiales (O.N.E.R.A.), 92320 Châtillon-sous-Bagneux (FR)
(72) Inventeur: LE TRAON, Olivier, F-91430 Vauhallan (FR); MASSON, Stève, F-92350 Le Plessis Robinson (FR); GUERARD, Jean, F-91260 Juvisy (FR); LEVY, Raphaël, F-75014 Paris (FR); CHARTIER, Claude, F-91300 Massy (FR); JANIAUD, Denis, F-91940 Les Ullis (FR)
(74) Mandataire: Bezault, Jean
(86) Numéro de dépôt international: PCT/FR2010/000854
(87) Numéro de publication internationale: WO 2011/086247

(56) Documents cités:
- EP-A1- 1 816 434
- US-A- 5 939 631

## Description

La présente invention concerne, de manière générale, des gyromètres vibrants piézoélectriques permettant de mesurer la rotation d'un objet dans l'espace.

Plus particulièrement, l'invention a trait à des électrodes d'excitation et de détection piézoélectriques des deux modes utiles d'un diapason et à des circuits électroniques associés, permettant d'éviter le couplage par effet électrostatique entre les électrodes dédiées à l'un des deux modes utiles et celles dédiées à l'autre mode utile, tout en procurant une bonne efficacité piézoélectrique de ces électrodes et en s'accommodant d'un faible coût de fabrication.

Le principe de fonctionnement d'un gyromètre vibrant est basé sur la détection des accélérations de Coriolis qui agissent sur un résonateur vibrant selon un premier mode utile appelé mode pilote, lorsque ce résonateur est soumis à une rotation de vitesse angulaire Ω̅ référencée par rapport à un repère inertiel dit galiléen. Ainsi, les accélérations de Coriolis sont alternatives à la fréquence dudit premier mode utile et excitent un second mode utile de vibration appelé mode détecteur dont l'amplitude de vibration est proportionnelle à Ω. La mesure de cette amplitude, convertie généralement sous forme de signaux électriques, permet ainsi de déterminer Ω.

Il est connu que l'élément vibrant peut être un diapason à deux branches solidaires d'une partie commune, dont le mode pilote est une vibration en flexion des deux branches en opposition de phase entre elles parallèlement au plan du diapason et dont le mode détecteur est une vibration en flexion des deux branches en opposition de phase entre elles perpendiculairement au plan du diapason.

Il est ainsi connu, par exemple du document EP 1 816 434 A1, de réaliser le diapason dans une plaque plane de quartz dont les faces sont parallèles au plan cristallographique XY, les branches du diapason étant orientées parallèlement à l'axe Y, et que des moyens pour maintenir en vibration le mode pilote et détecter le mode détecteur sont des électrodes sous la forme de rubans conducteurs disposés longitudinalement sur les deux branches et agissant par effet piézoélectrique.

Plus généralement, il est connu de l'homme du métier que d'autres cristaux piézoélectriques et d'autres orientations de la plaque dans le repère cristallographique sont possibles, l'important étant d'obtenir un couplage piézoélectrique suffisant entre l'extension ou la compression des fibres longitudinales des branches vibrant en flexion et le champ électrique ou le déplacement des charges dans des directions perpendiculaires aux axes longitudinaux des branches.

Les électrodes pour maintenir en vibration le mode pilote sont reliées à un circuit électronique oscillateur qui permet de maintenir le mode pilote en vibration de résonance, et comportent au moins une électrode d'excitation du mode pilote sur laquelle est présent un potentiel alternatif d'excitation et au moins une électrode de détection du mode pilote, afin de permettre l'oscillation électromécanique du mode pilote. L'intérêt de travailler en vibration de résonance est de concilier une grande amplitude de vibration du mode pilote, et donc une bonne sensibilité du gyromètre, avec une faible consommation électrique du dispositif. Afin de faciliter la description, lesdites électrodes pour maintenir en vibration le mode pilote seront appelées respectivement électrode d'excitation pilote et électrode de détection pilote. Les électrodes pour détecter le mode détecteur sont reliées à un circuit électronique de détection qui permet d'élaborer une tension électrique représentative de la vitesse de rotation à mesurer. Contrairement au mode pilote, le mode détecteur travaille généralement en vibration forcée et ne nécessite donc qu'au moins une électrode de détection, appelée électrode de détection Coriolis.

Il est connu également que des électrodes d'excitation pilote, de détection pilote et de détection Coriolis cohabitent côte à côte le long de chacune des deux branches, en particulier au voisinage de l'extrémité solidaire de la partie commune, car c'est là où les contraintes mécaniques des vibrations de flexion sont maximales, c'est-à-dire là où l'effet piézoélectrique est maximal. Cela permet d'obtenir une bonne efficacité piézoélectrique de l'ensemble des électrodes, et ainsi que la consommation électrique de l'excitation pilote soit relativement faible et que la sensibilité de la détection Coriolis soit relativement forte.

La disposition côte à côte d'électrodes d'excitation pilote, de détection pilote et de détection Coriolis nécessite de prendre certaines précautions pour éviter que les potentiels électriques alternatifs d'excitation du mode pilote ne génèrent par effet électrostatique l'apparition de signaux électriques indésirables sur les électrodes de détection Coriolis, ces signaux pouvant être faussement interprétés comme provenant d'une rotation de vitesse Ω appliquée au dispositif. Ainsi, il est connu (brevet US n° 5,939,631) de mettre en oeuvre deux moyens qui cumulent leurs efficacités.

Le premier moyen connu consiste à imposer deux potentiels électriques alternatifs en opposition de phase sur deux électrodes d'excitation pilote respectivement, ce qui peut être obtenu au moyen d'un aménagement du circuit oscillateur, et à disposer l'ensemble des électrodes de telle sorte que par symétrie les électrodes de détection Coriolis reçoivent chacune par effet électrostatique autant de signaux indésirables positifs que de signaux indésirables négatifs, c'est-à-dire reçoivent chacune un signal indésirable globalement nul. Dans la pratique, compte tenu des imperfections habituelles de réalisation, ce premier moyen connu permet de réduire par un à deux ordres de grandeur l'amplitude des signaux indésirables.

Le second moyen connu consiste à interposer entre les électrodes d'excitation pilote et les électrodes de détection Coriolis un écran de masse sous la forme de rubans conducteurs supplémentaires disposés sur les deux branches du diapason et reliés à la masse électrique du dispositif. Ces rubans conducteurs supplémentaires ont la même allure générale que des électrodes et ne peuvent pas de ce fait constituer un écran total entre les électrodes d'excitation pilote et les électrodes de détection Coriolis, mais ils permettent néanmoins de réduire encore par un à deux ordres de grandeur l'amplitude des signaux indésirables, cette réduction se cumulant avec celle obtenue par le premier moyen connu.

Il faut souligner que la mise en oeuvre simultanée de ces deux moyens connus, qui permet dans la pratique de réduire par trois à quatre ordres de grandeur l'amplitude des signaux indésirables, est très utile compte tenu des très faibles valeurs du signal issu des accélérations de Coriolis. Ainsi, à titre d'exemple, une rotation de vitesse angulaire 1 degré/seconde peut générer par effet piézoélectrique sur les électrodes de détection Coriolis des charges électriques de l'ordre de 10⁻¹⁶ Coulomb, alors que les charges indésirables générées par effet électrostatique peuvent être, avant mise en oeuvre des deux moyens connus, de l'ordre de 10⁻¹² Coulomb. Dans ces conditions, les deux moyens connus permettent de réduire les charges indésirables à des valeurs de l'ordre de 10⁻¹⁶ à 10⁻¹⁵ Coulomb, ce qui est suffisamment faible pour que des opérations de traitement du signal permettent d'obtenir une précision de mesure du gyromètre de l'ordre de 0,01 degré/seconde.

Dans le cas de la réalisation connue décrite dans le brevet déjà cité, l'ajout des rubans conducteurs supplémentaires reliés à la masse électrique du dispositif présente peu d'inconvénients, car les électrodes sont disposées sur les quatre faces longitudinales de chacune des branches, et il y a de ce fait suffisamment de place pour que la présence des rubans supplémentaires n'empiète pas significativement sur la place disponible pour les électrodes, et ainsi n'altère pratiquement pas l'efficacité piézoélectrique des électrodes. On notera que le diapason de la réalisation connue est obtenu par usinage chimique d'une plaque de quartz, que les électrodes et les rubans supplémentaires disposés sur les faces parallèles au plan de la plaque peuvent être obtenus au moyen des procédés photolithographiques utilisés pour la fabrication à faible coût des résonateurs horlogers, mais que la réalisation des électrodes disposées sur les flancs usinés des branches nécessite des moyens notablement plus onéreux tels que l'évaporation de métal au travers d'un masque mécanique disposé sur le diapason usiné.

Dans le cas d'une fabrication à faible coût, c'est-à-dire pour laquelle il faut proscrire la disposition d'électrodes sur les flancs usinés des branches et donc se contenter des faces parallèles au plan de la plaque, l'ajout des rubans supplémentaires reliés à la masse électrique du dispositif ne peut se faire qu'au détriment de la place disponible pour les électrodes et donc de l'efficacité piézoélectrique des électrodes.

Ainsi, l'enseignement de la technique antérieure ne permet pas, dans le cas d'une réalisation à faible coût, de bénéficier à la fois d'une importante réduction du signal indésirable et d'une efficacité piézoélectrique satisfaisante des électrodes.

La présente invention vise à remédier à cet inconvénient de la technique antérieure en fournissant une disposition des électrodes sur les seules faces parallèles au plan de la plaque et un arrangement des circuits électroniques associés auxdites électrodes qui permettent, sans recourir à des rubans conducteurs supplémentaires reliés à la masse électrique du dispositif, d'obtenir une importante réduction des signaux indésirables générés électrostatiquement sur les électrodes de détection Coriolis par les potentiels électriques alternatifs d'excitation. Ainsi, l'efficacité piézoélectrique des électrodes peut être satisfaisante car il y a suffisamment de place disponible pour les électrodes, et les électrodes sont réalisables à faible coût car il n'y a pas d'électrodes sur les flancs usinés des branches du diapason.

A cette fin, le gyromètre à effet Coriolis, comportant un diapason usiné dans une plaque plane de cristal piézoélectrique et vibrant selon un mode pilote et un mode détecteur, les deux branches du diapason supportant des électrodes d'excitation pilote et des électrodes de détection pilote reliées à un circuit électronique oscillateur permettant de maintenir le mode pilote en vibration de résonance et des électrodes de détection Coriolis reliées à un circuit électronique de détection du mode détecteur, les électrodes étant constituées de rubans conducteurs supportés par les seules faces de la plaque et disposés parallèlement aux axes longitudinaux des branches, chacune des faces parallèles au plan de la plaque de chacune des branches supportant un ruban d'excitation pilote et un ruban de détection pilote et un ruban de détection Coriolis, est caractérisé en ce que pour chacune des faces parallèles au plan de la plaque de chacune des branches le ruban de détection pilote est disposé entre le ruban d'excitation pilote et le ruban de détection Coriolis et est relié à l'entrée inverseuse d'un amplificateur opérationnel dont l'entrée non inverseuse est reliée à la masse électrique du dispositif, ledit amplificateur opérationnel constituant le composant électronique actif d'un amplificateur de charges ou de courant faisant partie du circuit électronique oscillateur et servant à détecter l'amplitude de la vibration du mode pilote.

Ainsi, le rôle d'un amplificateur opérationnel étant de maintenir à une valeur quasiment nulle la différence de potentiel électrique entre ses entrées inverseuse et non inverseuse, chaque ruban de détection pilote est quasiment à la masse électrique du dispositif et peut ainsi, en plus de sa contribution au fonctionnement du circuit oscillateur du mode pilote, jouer le rôle d'un écran de masse préservant pour la branche qui le supporte le ruban coplanaire de détection Coriolis de l'influence du potentiel électrique alternatif présent sur le ruban coplanaire d'excitation pilote.

Les caractéristiques et avantages de l'invention apparaîtront plus clairement à la lecture de la description détaillée et des figures qui s'y rapportent dans lesquelles :
- la figure 1 est une vue de face montrant un diapason en quartz équipé d'électrodes selon l'invention ;
- la figure 2 montre une vue de section transversale des deux branches du diapason et des électrodes de la figure 1, et un schéma des circuits électroniques selon l'invention associés auxdites électrodes ;
- la figure 3 est une vue de face montrant un diapason en quartz équipé d'autres électrodes selon l'invention ;
- la figure 4 est une vue de face d'une structure monolithique de gyromètre comprenant un diapason identique à celui illustré à la figure 1, destinée à montrer les rubans conducteurs de raccordement électrique des électrodes et les plages de contact pour raccorder les circuits électroniques ;
- la figure 5 est une vue de face de la structure monolithique de gyromètre de la figure 4 sur laquelle ont été ajoutés des peignes inter digités afin d'améliorer le fonctionnement du circuit oscillateur du mode pilote.

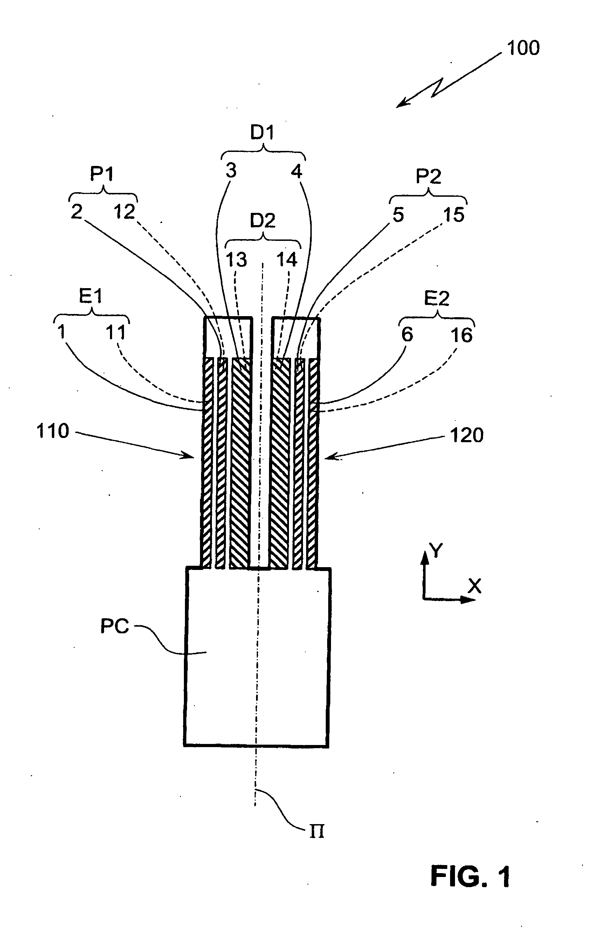

La figure 1 montre un diapason 100 à deux branches 110 et 120 solidaires d'une partie commune PC, usiné dans une plaque plane de quartz parallèle au plan cristallographique XY, les deux branches 110 et 120 étant parallèles à l'axe Y. D'autres cristaux piézoélectriques peuvent convenir au gyromètre selon l'invention, par exemple l'orthophosphate de gallium ou la langasite, de même que d'autres orientations de la plaque, comme c'est le cas par exemple d'une plaque de quartz tournée d'un angle θ autour de l'axe X. Il doit donc être entendu que la portée de l'invention n'est pas limitée au quartz et aux orientations cristallographiques illustrées à la figure 1, mais s'étend plus généralement aux cristaux piézoélectriques et aux orientations cristallographiques qui permettent d'obtenir un couplage piézoélectrique suffisant entre l'extension ou la compression des fibres longitudinales des branches vibrant en flexion et le champ électrique ou le déplacement des charges dans des directions perpendiculaires aux axes longitudinaux des branches.

Le diapason 100 est équipé d'électrodes selon l'invention, constituées de rubans conducteurs disposés longitudinalement sur les seules faces des deux branches du diapason parallèles au plan de la plaque. Lesdits rubans conducteurs peuvent être réalisés par exemple au moyen des procédés photolithographiques utilisés pour la fabrication à faible coût des résonateurs horlogers. La figure 1 montre la disposition des rubans 1, 2, 3, 4, 5, 6 sur l'une des faces de la plaque, les rubans 11, 12, 13, 14, 15, 16 sur l'autre face étant disposés en regard respectivement. Afin de faciliter la compréhension du dessin, les rubans référencés à l'aide d'un trait d'annotation en pointillé sont disposés sur l'autre face. Les dimensions de chacun des rubans sont sensiblement identiques à celles du ruban disposé en regard sur l'autre face. De plus, le diapason 100 ainsi équipé des rubans est sensiblement symétrique par rapport à un plan n perpendiculaire au plan de la plaque et parallèle aux axes longitudinaux des branches.

Toujours en référence à la figure 1, chacune des faces parallèles au plan de la plaque de chacune des deux branches supporte un ruban d'excitation pilote (1 ; 11 ; 6 ; 16), un ruban de détection pilote (2 ; 12 ; 5 ; 15) et un ruban de détection Coriolis (3 ; 13 ; 4 ; 14), et le ruban de détection pilote est disposé entre le ruban d'excitation pilote et le ruban de détection Coriolis. On notera que les quatre rubans des électrodes de détection Coriolis affleurent la fente séparant les deux branches du diapason.

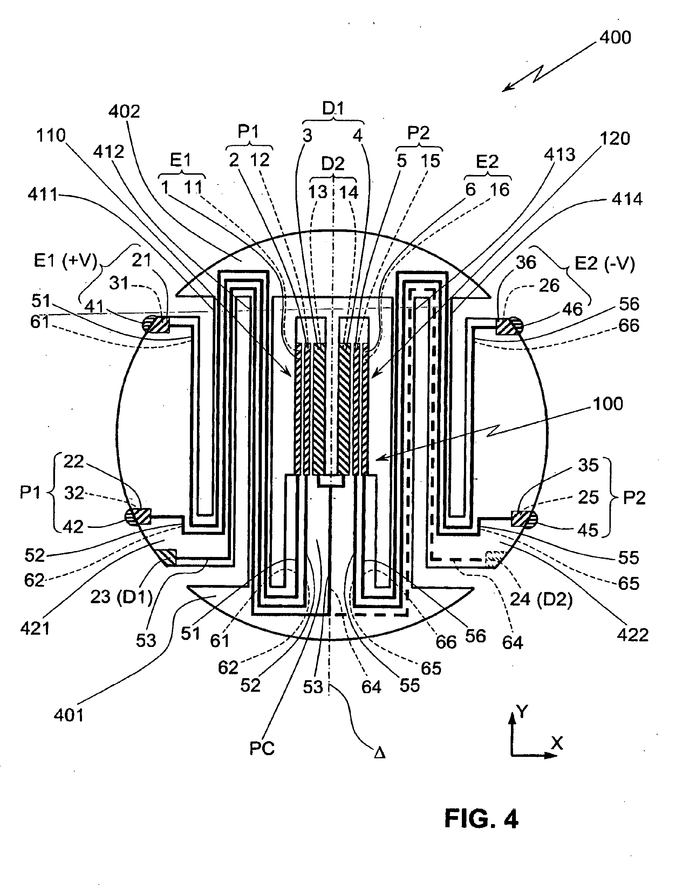

Toujours en référence à la figure 1, des connexions électriques externes (non représentées) relient les rubans 1 et 11 pour former l'électrode d'excitation pilote E1, les rubans 6 et 16 pour former l'électrode d'excitation pilote E2, les rubans 2 et 12 pour former l'électrode de détection pilote P1, et les rubans 5 et 15 pour former l'électrode de détection pilote P2. On notera que lesdites connexions électriques externes, dont la réalisation sera expliquée en référence à la figure 4 pour une structure monolithique de gyromètre, relient pour chacune des électrodes d'excitation pilote et de détection pilote un ruban et le ruban disposé en regard sur l'autre face de la plaque. D'autres connexions électriques (non représentées) relient les rubans coplanaires 3 et 4 pour former l'électrode de détection Coriolis D1, et les rubans coplanaires 13 et 14 pour former l'électrode de détection Coriolis D2. Pour la disposition des rubans illustrée à la figure 1, ces autres connexions électriques peuvent être constituées de rubans conducteurs de raccordement supportés par les faces de la partie commune PC parallèles au plan de la plaque ainsi qu'il sera montré à la figure 4.

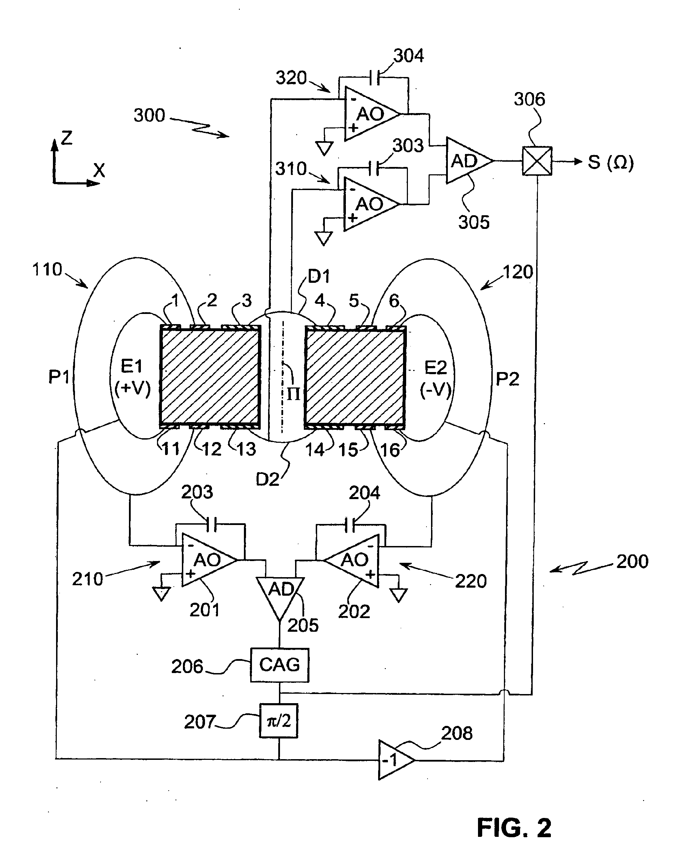

La figure 2 montre une section transversale des deux branches 110 et 120 et des électrodes selon l'invention illustrées à la figure 1, ainsi qu'un schéma des circuits électroniques selon l'invention associés auxdites électrodes. Les circuits électroniques comportent un circuit oscillateur 200 qui permet de maintenir le mode pilote en vibration de résonance, et un circuit de détection 300 du mode détecteur qui permet d'élaborer une tension électrique représentative de la vitesse de rotation à mesurer.

Le circuit oscillateur 200 comporte deux amplificateurs de charges 210 et 220, un amplificateur différentiel 205, un circuit de contrôle automatique de gain 206, un circuit déphaseur 207 et un circuit inverseur 208. Pour chacune des branches (110 ; 120) du diapason, l'électrode de détection pilote (P1 ; P2) est reliée à l'entrée inverseuse d'un amplificateur opérationnel (201 ; 202) dont l'entrée non inverseuse est reliée à la masse électrique du dispositif, ledit amplificateur opérationnel constituant le composant électronique actif de l'amplificateur de charges (210 ; 220) obtenu par l'adjonction d'un condensateur (203 ; 204) entre ladite entrée inverseuse et la sortie de l'amplificateur opérationnel. Ainsi, la tension de sortie de l'amplificateur opérationnel (201 ; 202) est proportionnelle aux charges générées par la vibration du mode pilote, et son amplitude est donc proportionnelle à l'amplitude de vibration du mode pilote. Compte tenu de la disposition des électrodes d'excitation pilote et de détection pilote sur les deux branches et des vibrations en flexion des deux branches en opposition de phase entre elles parallèlement au plan de la plaque, les tensions de sortie des deux amplificateurs opérationnels 201 et 202 sont en opposition de phase entre elles et ainsi additionnent leurs amplitudes à travers l'amplificateur différentiel 205 dont le signal de sortie, après contrôle d'amplitude au moyen du circuit de contrôle automatique de gain 206 et après déphasage de π/2 au moyen du circuit déphaseur 207, est appliqué d'une part sur l'électrode E1 et d'autre part, après inversion au moyen du circuit inverseur 208, sur l'électrode E2. Ainsi, le circuit oscillateur 200 peut être vu comme une double boucle électronique oscillatrice permettant d'entretenir la vibration de résonance du mode pilote en imposant sur les électrodes d'excitation pilote E1 et E2 des potentiels électriques alternatifs d'excitation respectivement +V et - V en opposition de phase entre eux, en cohérence avec les vibrations en flexion des deux branches en opposition de phase entre elles parallèlement au plan de la plaque. Le circuit oscillateur 200 du gyromètre selon l'invention peut également fonctionner avec des amplificateurs de courant en remplacement des amplificateurs de charges 210 et 220, à condition de supprimer le circuit déphaseur 207 pour respecter la condition de phase nécessaire à l'obtention de l'oscillation électromécanique. Dans son principe, la transformation de l'amplificateur de charges (210 ; 220) en amplificateur de courant s'obtient en remplaçant le condensateur (203 ; 204) par une résistance. Cependant, pour le gyromètre selon l'invention, l'amplificateur de charges est généralement préférable à l'amplificateur de courant qui induit un bruit supplémentaire du signal propre à la résistance.

Le circuit de détection 300 du mode détecteur comporte deux amplificateurs de charges 310 et 320 similaires à ceux (210 et 220) mis en oeuvre dans le circuit oscillateur 200, un amplificateur différentiel 305 similaire à l'amplificateur différentiel 205 et un circuit de démodulation synchrone 306. Chacune des électrodes de détection Coriolis (D1 ; D2) est reliée à l'entrée d'un amplificateur de charges (310 ; 320) dont la tension de sortie est proportionnelle aux charges générées par les accélérations alternatives de Coriolis. L'amplitude de ladite tension de sortie est ainsi proportionnelle à la vitesse de rotation Ω à mesurer. Compte tenu de la disposition des électrodes de détection Coriolis sur les deux branches et des vibrations en flexion des deux branches en opposition de phase entre elles perpendiculairement au plan de la plaque, les tensions de sortie des deux amplificateurs de charges 310 et 320 sont en opposition de phase entre elles et ainsi additionnent leurs amplitudes à travers l'amplificateur différentiel 305 dont le signal de sortie est démodulé de manière synchrone par un signal issu du circuit oscillateur 200 afin d'élaborer la tension continue S(Ω) représentative de la vitesse de rotation à mesurer.

Toujours en référence à la figure 2, on notera que la disposition symétrique des rubans par rapport au plan Π et les deux potentiels alternatifs +V et -V en opposition de phase sur les électrodes d'excitation pilote E1 et E2 respectivement permettent que chacune des électrodes de détection Coriolis D1 et D2 reçoit par effet électrostatique sensiblement autant de charges positives que de charges négatives, c'est-à-dire une quantité globale de charges sensiblement nulle. Ainsi, par cet aspect commun avec le premier moyen connu expliqué dans le préambule, une première qualité du gyromètre selon l'invention est de permettre la réduction par un à deux ordres de grandeur des charges électriques indésirables dues aux potentiels d'excitation.

Une deuxième qualité, propre au gyromètre selon l'invention, concerne une réduction supplémentaire desdites charges indésirables obtenue par la disposition, sur chacune des faces parallèles au plan de la plaque de chacune des branches, du ruban de détection pilote entre le ruban d'excitation pilote et le ruban de détection Coriolis, ledit ruban de détection pilote étant relié à l'entrée inverseuse d'un amplificateur opérationnel dont l'entrée non inverseuse est reliée à la masse électrique du dispositif. Ainsi, le rôle d'un amplificateur opérationnel étant de maintenir à une valeur quasiment nulle la différence de potentiel électrique entre ses entrées inverseuse et non inverseuse, chaque ruban de détection pilote est quasiment à la masse électrique du dispositif et peut ainsi, en plus de sa contribution au fonctionnement du circuit oscillateur du mode pilote, jouer le rôle d'un écran de masse préservant pour la branche qui le supporte le ruban coplanaire de détection Coriolis de l'influence du potentiel électrique alternatif présent sur le ruban coplanaire d'excitation pilote. A titre indicatif, pour le gyromètre selon l'invention, la différence de potentiel entre les entrées inverseuse et non inverseuse de chacun des amplificateurs opérationnels (201 ; 202) du circuit oscillateur 200 peut être inférieure à 10⁻⁶ volt. Ainsi, il est possible de réduire encore par un à deux ordres de grandeur les charges électriques indésirables dues aux potentiels alternatifs d'excitation, cette réduction se cumulant avec celle expliquée précédemment obtenue par la disposition symétrique des rubans par rapport au plan II et les deux potentiels alternatifs d'excitation en opposition de phase sur les électrodes d'excitation pilote E1 et E2 respectivement.

Ainsi il n'est pas utile, contrairement au gyromètre connu expliqué dans le préambule, d'ajouter des rubans supplémentaires reliés à la masse électrique du dispositif. Cela permet que les seules faces des branches parallèles au plan de la plaque offrent suffisamment de place pour y disposer des électrodes dont l'efficacité piézoélectrique est satisfaisante.

Ainsi, il est possible de réaliser à faible coût un gyromètre performant.

Le lecteur pourrait s'inquiéter en se demandant si le rôle d'écran de masse joué par les électrodes de détection pilote P1 et P2 est aussi efficace que celui de rubans conducteurs directement reliés à la masse électrique du dispositif, notamment en ce qui concerne le bruit des signaux électriques présents sur les électrodes de détection Coriolis D1 et D2. Pour le gyromètre selon l'invention, il n'y a pas de différence significative d'efficacité entre les deux si l'on prend soin que la capacité de chacun des condensateurs (303 ; 304) du circuit de détection 300 du mode détecteur soit nettement supérieure, par exemple 10 fois supérieure, à la capacité de chacun des condensateurs dont une armature est formée par un ruban de détection Coriolis (3 ; 4 ; 13 ; 14) et l'autre armature est formée par le ruban de détection pilote (2 ; 5 ; 12 ; 15) disposé côte à côte.

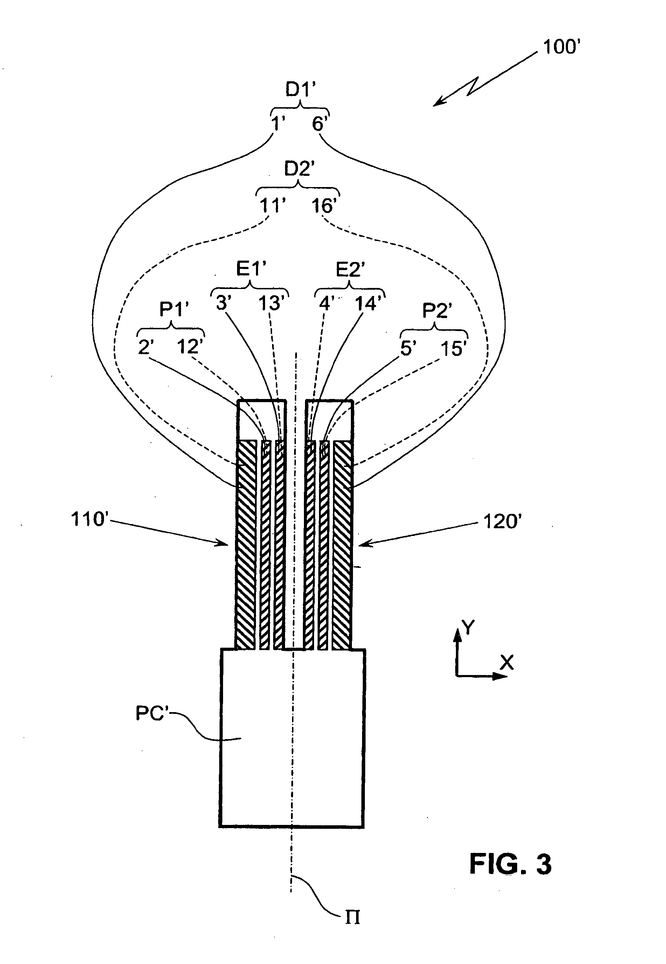

La figure 3 montre un diapason 100' équipé d'autres électrodes selon l'invention. Par rapport au diapason 100 illustré à la figure 1, la différence réside dans la disposition des rubans d'excitation pilote 3', 13', 4', 14', et de détection Coriolis 1', 11', 6', 16'. Plus précisément, les rubans de détection Coriolis n'affleurent pas la fente séparant les deux branches du diapason mais affleurent les flancs usinés opposés des branches. Par ailleurs, les autres caractéristiques des électrodes du diapason 100' sont identiques à celles du diapason 100, c'est-à-dire notamment que chacune des faces parallèles au plan de la plaque de chacune des deux branches supporte un ruban d'excitation pilote (3' ; 13' ; 4' ; 14'), un ruban de détection pilote (2' ; 12' ; 5' ; 15') et un ruban de détection Coriolis (1' ; 11' ; 6' ; 16'), et le ruban de détection pilote est disposé entre le ruban d'excitation pilote et le ruban de détection Coriolis.

De même que le diapason 100, le diapason 100' ainsi équipé de rubans est sensiblement symétrique par rapport à un plan Π perpendiculaire au plan de la plaque et parallèle aux axes longitudinaux des branches, et des connexions électriques externes (non représentées) relient chaque ruban d'excitation pilote et de détection pilote au ruban respectivement d'excitation pilote et de détection pilote disposé en regard sur l'autre face de la plaque pour former une électrode respectivement d'excitation pilote et de détection pilote (E1' ; E2' ; P1' ; P2').

En ce qui concerne les électrodes de détection D1' et D2' formées chacune, comme pour le diapason 100, en reliant deux rubans coplanaires de détection Coriolis, il n'est pas possible, dans le cas du diapason 100', de réaliser ces connexions au moyen de rubans conducteurs de raccordement supportés par les faces de la partie commune PC sous peine d'empêcher les connexions électriques externes correspondant aux électrodes d'excitation pilote et de détection pilote. Pour les électrodes de détection D1' et D2' du diapason 100', il est donc nécessaire de recourir à des connexions électriques externes.

Vis-à-vis du fonctionnement des électrodes, les électrodes E1', E2', P1', P2', D1', D2' du diapason 100' jouent des rôles similaires à ceux des électrodes respectivement E1, E2, P1, P2, D1, D2 du diapason 100.

Ainsi, de même qu'expliqué pour le diapason 100 en référence aux figures 1 et 2, l'électrode de détection pilote (P1' ; P2') de chacune des branches du diapason 100' est reliée à l'entrée inverseuse d'un amplificateur opérationnel dont l'entrée non inverseuse est reliée à la masse électrique du dispositif, ledit amplificateur opérationnel constituant le composant électronique actif d'un amplificateur de charges ou de courant faisant partie d'un circuit électronique oscillateur et servant à détecter l'amplitude de la vibration du mode pilote.

De même que pour le diapason 100, les électrodes d'excitation pilote E1' et E2' du diapason 100' sont reliées à ce circuit oscillateur qui permet de maintenir, en imposant sur lesdites électrodes d'excitation des potentiels alternatifs en opposition de phase entre eux, le mode pilote en vibration de résonance en flexion des deux branches en opposition de phase entre elles parallèlement au plan de la plaque, et les électrodes de détection Coriolis sont reliées à un circuit de détection du mode détecteur qui permet d'élaborer une tension électrique proportionnelle à l'amplitude du mode détecteur pour lequel les deux branches vibrent en opposition de phase entre elles perpendiculairement au plan de la plaque, c'est-à-dire une tension électrique proportionnelle à la vitesse de rotation Ω à mesurer.

Le lecteur aura compris que, de même que pour le diapason 100, les électrodes du diapason 100' et l'arrangement des circuits électroniques associés similaires aux circuits illustrés à la figure 2 permettent de réaliser à faible coût un gyromètre performant.

La figure 4 montre une structure monolithique 400 de gyromètre, usinée dans une plaque plane de quartz, et comprenant dans sa partie centrale un diapason identique à celui (100) illustré à la figure 1 pour lequel on conservera sur la figure 4 les références pour les électrodes selon l'invention et pour les rubans les constituant. La structure monolithique 400 comprend également deux parties massives mobiles 401, 402, quatre bras souples 411, 412, 413, 414, et deux parties fixes 421 et 422. La structure monolithique 400 est sensiblement symétrique par rapport à un axe médian Δ parallèle aux axes longitudinaux des branches du diapason. On notera que l'axe médian Δ est contenu dans le plan II de symétrie illustré aux figures 1, 2 et 3. L'agencement particulier desdites parties massives mobiles et desdits bras souples permet de procurer un excellent filtrage mécanique des vibrations des modes utiles du diapason 100 vis-à-vis des parties fixes 421 et 422. Cet agencement particulier est l'objet du brevet FR n° 2 789 171 au nom du demandeur.

Les rubans conducteurs de raccordement électrique des électrodes et les plages de contact pour raccorder les circuits électroniques (non représentés) sont maintenant expliqués. Pour faciliter la compréhension de la description, on appellera face avant la face visible sur la figure 4, et face arrière la face située en regard.

Des plages de contact 21, 22, 23 de forme sensiblement trapézoïdale sont disposées sur la face avant de la partie fixe 421, et des plages de contact 31, 32 sont disposées sur la face arrière en regard des plages 21, 22 respectivement. Des plages de contact 24, 25, 26 sont disposées sur la face arrière de la partie fixe 422, et des plages de contact 35, 36 sont disposées sur la face avant en regard des plages 25, 26 respectivement. On notera que la disposition des plages de contact respecte la symétrie de la structure monolithique 400 par rapport à l'axe médian Δ. En d'autres termes, du point de vue géométrique, les plages de contact situés sur l'une des faces (avant, arrière) de l'une des parties fixes (421, 422) se retrouvent, après rotation de 180° autour de l'axe Δ, sur l'autre face de l'autre partie fixe.

Des raccords conducteurs externes 41, 42, 45, 46 disposés sur les flancs usinés des parties fixes permettent de relier les plages de contact 21, 22, 35, 36 disposées sur la face avant aux plages de contact respectivement 31, 32, 25, 26 disposées sur la face arrière. Lesdits raccords conducteurs externes sont par exemple réalisés au moyen d'une colle conductrice, ce qui présente l'avantage d'une mise en oeuvre simple et bon marché. On notera que la présence de colle conductrice sur les parties fixes 421 et 422 ne présente pas d'inconvénient vis-à-vis du fonctionnement du gyromètre. Cela ne serait pas le cas si la colle conductrice était disposée sur toute autre partie de la structure monolithique 400 de gyromètre, car il en résulterait un amortissement des vibrations des modes utiles et donc une diminution des performances du gyromètre.

Toujours en référence à la figure 4, les plages de contact sont reliées aux rubans conducteurs constituant les électrodes du diapason 100 au moyen de rubans conducteurs de raccordement disposés sur la partie commune PC du diapason 100, les parties massives mobiles 401, 402, les bras souples 411, 412, 413, 414 et les parties fixes 421 et 422. La disposition desdits rubans conducteurs de raccordement étant symétrique par rapport à l'axe médian Δ, leur description détaillée sera limitée à la face avant de la structure monolithique de gyromètre. Les rubans 1 et 2 de la branche 110 sont reliés aux plages de contact respectivement 21 et 22 au moyen des rubans de raccordement respectivement 51 et 52. De façon symétrique par rapport au plan Π perpendiculaire au plan de la plaque et contenant l'axe Δ, les rubans 6 et 5 de la branche 120 sont reliés aux plages de contact respectivement 36 et 35 au moyen des rubans de raccordement respectivement 56 et 55. Les rubans 3 et 4 sont reliés entre eux et à la plage de contact 23 au moyen du ruban de raccordement 53. Sur la face arrière, ainsi qu'indiqué sur la figure, les rubans de raccordement 61, 62, 66, 65 sont en regard des rubans de raccordement respectivement 51, 52, 56, 55, et les rubans 13 et 14 sont reliés entre eux et à la plage de contact 24 au moyen du ruban de raccordement 64. Ainsi, grâce à la disposition des rubans de raccordement et des plages de contact sur les faces avant et arrière de la structure monolithique 400, et aux raccords conducteurs externes disposés sur les flancs usinés des parties fixes 421 et 422, il est possible de réaliser les connexions commentées précédemment en relation avec la figure 1 entre les rubans constituant les électrodes selon l'invention. De plus, chacune desdites électrodes (E1 ; E2 ; P1 ; P2 ; D1 ; D2) est reliée à au moins une plage de contact (21, 31 ; 26, 36 ; 22, 32 ; 25, 35 ; 23 ; 24) facilement accessible pour le raccordement des circuits électroniques.

On notera que la symétrie par rapport à l'axe médian Δ des rubans constituant les électrodes, des rubans de raccordement et des plages de contact permet de les réaliser sur les faces avant et arrière de la plaque au moyen du même masque photolithographique, car il suffit de retourner la plaque par une rotation de 180° autour de l'axe Δ entre l'opération de photolithographie réalisée sur la face avant et celle réalisée sur la face arrière.

On notera également que la disposition des rubans de raccordement respecte la caractéristique des électrodes selon l'invention, puisque les rubans de raccordement 53, 64 des électrodes de détection Coriolis respectivement D1, D2 sont préservés de l'influence des potentiels alternatifs présents sur les rubans de raccordement des électrodes d'excitation pilote E1 et E2 grâce au rôle d'écran de masse joué par les rubans de raccordement des électrodes de détection pilote P1 et P2.

Cependant, en fonction des dimensions de la structure monolithique 400 et de la fréquence de vibration du mode pilote, il est possible que la longueur relativement grande des rubans de raccordement des électrodes d'excitation pilote et de détection pilote présente un inconvénient vis-à-vis du fonctionnement des boucles électroniques oscillatrices du circuit oscillateur 200 montré à la figure 2. Cet inconvénient, connu plus généralement dans le domaine des oscillateurs à quartz sous l'appellation « influence de la capacité inter électrodes », est expliqué dans ce qui suit pour les électrodes E1 et P1, l'explication étant similaire pour les électrodes E2 et P2.

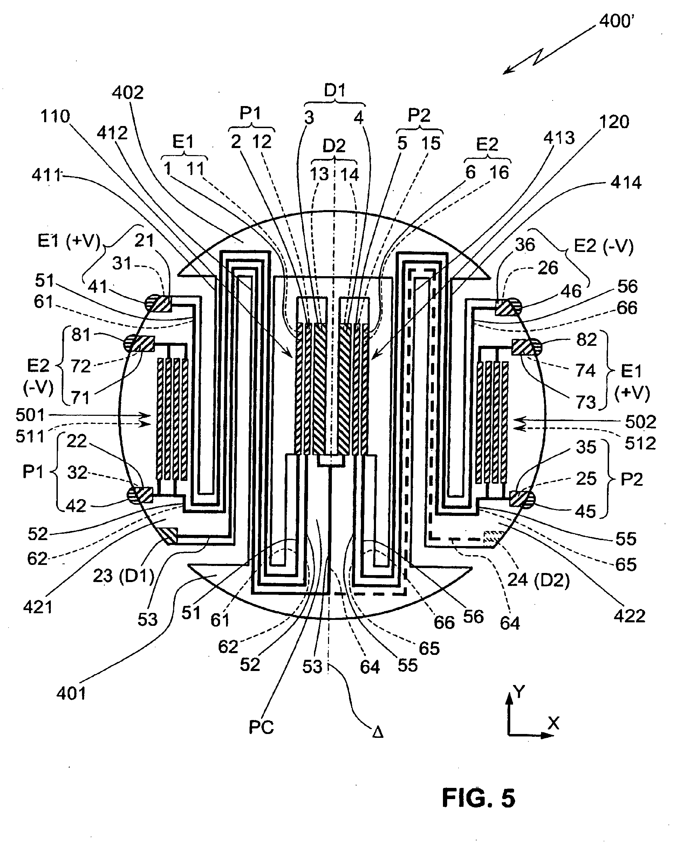

Toujours en référence à la figure 4, lorsque le mode pilote est maintenu en vibration de résonance, les rubans conducteurs 2, 12, 52, 62 correspondant à l'électrode P1 reçoivent des charges électriques de deux provenances différentes. La première provenance, dite utile, est la vibration du mode pilote qui génère des charges par effet piézoélectrique, lesdites chargent permettant de détecter l'amplitude de vibration mécanique du mode pilote et étant en phase avec ladite vibration mécanique. La seconde provenance, dite parasite, est le potentiel alternatif +V d'excitation imposé sur les rubans 1, 11, 51, 61 correspondant à l'électrode E1, ledit potentiel alternatif générant par effet électrostatique des charges sur les rubans correspondant à l'électrode P1. Ces charges, dites parasites, sont en phase avec le potentiel alternatif +V d'excitation et donc en quadrature de phase avec la vibration mécanique puisqu'il s'agit d'une vibration de résonance. Ainsi, les charges utiles et les charges parasites sont en quadrature de phase entre elles, et les charges globales générées sur les rubans correspondant à l'électrode P1 ne sont pas en phase par rapport aux charges utiles, ce qui risque d'être préjudiciable au bon fonctionnement du gyromètre. On désignera par C la capacité du condensateur dont une armature est formée par les rubans 1, 11, 51, 61 correspondant à l'électrode E1 et l'autre armature est formée par les rubans 2, 12, 52, 62 correspondant à l'électrode P1. La valeur des charges parasites est donc Q_{PARASITE} = (+V) x C. Il est expliqué dans ce qui suit un moyen de remédier à cet inconvénient, en référence à la figure 5.

La figure 5 montre une structure monolithique 400' de gyromètre obtenue à partir de la structure monolithique 400 illustrée à la figure 4 en ajoutant des peignes inter digités 501, 511, 502, 512 sur les deux faces (avant, arrière) des parties fixes 421 et 422 respectivement.

Sur la face avant de la partie fixe 421, le peigne inter digité 501 comporte des dents reliées au ruban de raccordement 52 correspondant à l'électrode P1 et imbriquées avec d'autres dents reliées à une plage de contact 71. Le peigne 501 est disposé entre le ruban de raccordement 52 correspondant à l'électrode P1 et le ruban de raccordement 51 correspondant à l'électrode E1. Des connexions électriques (non représentées) relient la plage de contact 71 à l'électrode E2 dont le potentiel alternatif d'excitation est -V. Sur la face arrière, le peigne inter digité 511 est disposé en regard du peigne 501, en relation avec une plage de contact 72 reliée à la plage de contact 71 au moyen d'un raccord conducteur externe 81 disposé sur le flanc usiné de la partie fixe 421. Ainsi, les peignes inter digités 501 et 511 forment un condensateur de capacité C' entre les électrodes E2 et P1. Dans ces conditions, les potentiels alternatifs d'excitation +V et - V imposés sur les électrodes respectivement E1 et E2 génèrent par effet électrostatique l'apparition d'une quantité de charges Q = Q_{PARASITE} + (-V) x C' = V x (C - C') sur l'électrode d'excitation P1. Ainsi, en adaptant les dimensions des peignes inter digités pour que C = C', ce qui peut être obtenu par exemple au moyen d'un logiciel de simulation par éléments finis, il est possible de pratiquement compenser les charges parasites provenant du potentiel alternatif +V de l'électrode E1. Ainsi, les charges présentes sur l'électrode P1 ne sont pratiquement que les seules charges utiles, ce qui permet au gyromètre de bien fonctionner.

D'une façon analogue, il est possible de pratiquement compenser les charges parasites générées sur l'électrode P2 par le potentiel alternatif -V de l'électrode E2 au moyen des peignes inter digités 502 et 512 et des plages de contact 73 et 74 disposés sur les faces de la partie fixe 422, et du raccord conducteur externe 82 disposé sur le flanc usiné de la partie fixe 422, ainsi qu'il est montré sur la figure 5, et des connexions électriques (non représentées) reliant la plage de contact 73 à l'électrode E1.

On notera que la disposition des peignes inter digités respecte la caractéristique des électrodes selon l'invention, puisque les rubans de raccordement 53, 64 des électrodes de détection Coriolis respectivement D1, D2 sont préservés de l'influence des potentiels alternatifs présents sur les dents des peignes reliées aux électrodes d'excitation pilote E1 et E2 grâce au rôle d'écran de masse joué par les rubans de raccordement des électrodes de détection pilote P1 et P2.

Par ailleurs, la symétrie par rapport à l'axe médian Δ de l'ensemble des peignes inter digités, des rubans constituant les électrodes, des rubans de raccordement et des plages de contact permet de les réaliser sur les faces avant et arrière de la plaque au moyen du même masque photolithographique.

## Revendications

1. Gyromètre à effet Coriolis comportant un diapason (100) usiné dans une plaque plane de cristal piézoélectrique et vibrant selon un mode pilote et un mode détecteur, les deux branches (110, 120) du diapason (100) supportant des électrodes d'excitation pilote (E1, E2) et des électrodes de détection pilote (P1, P2) reliées à un circuit électronique oscillateur (200) permettant de maintenir le mode pilote en vibration de résonance et des électrodes de détection Coriolis (D1, D2) reliées à un circuit électronique de détection (300) du mode détecteur, les électrodes étant constituées de rubans conducteurs supportés par les seules faces de la plaque et disposés parallèlement aux axes longitudinaux des branches (110, 120), chacune des faces parallèles au plan de la plaque de chacune des branches supportant un ruban d'excitation pilote (1, 6) et un ruban de détection pilote (2,5) et un ruban de détection Coriolis (3, 4), **caractérisé en ce que** pour chacune des faces parallèles au plan de la plaque de chacune des branches (110, 120) le ruban de détection pilote (2,5) est disposé entre le ruban d'excitation pilote (1, 6) et le ruban de détection Coriolis (3, 4) et est relié à l'entrée inverseuse d'un amplificateur opérationnel (201, 202) dont l'entrée non inverseuse est reliée à la masse électrique du dispositif, ledit amplificateur opérationnel (201, 202) constituant le composant électronique actif d'un amplificateur de charges ou de courant (210, 220) faisant partie du circuit électronique oscillateur (200) et servant à détecter l'amplitude de la vibration du mode pilote.

2. Gyromètre selon la revendication 1, **caractérisé en ce que** chaque ruban d'excitation pilote (1, 6), de détection pilote (2,5) et de détection Coriolis (3, 4) supporté par une face de la plaque est disposé en regard d'un ruban respectivement d'excitation pilote (11, 16), de détection pilote (12, 15) et de détection Coriolis (13, 14) supporté par l'autre face de la plaque.

3. Gyromètre selon la revendication 2, **caractérisé en ce que** des connexions électriques relient chaque ruban d'excitation pilote (1, 6) au ruban (11, 16) disposé en regard sur l'autre face de la plaque pour former une électrode d'excitation pilote (E1, E2), chaque ruban de détection pilote (2,5) au ruban disposé en regard (12, 15) sur l'autre face de la plaque pour former une électrode de détection pilote (P1, P2), et chaque ruban de détection Coriolis (3, 4) au ruban de détection (13, 14) Coriolis disposé sur la même face de la plaque pour former une électrode de détection Coriolis (D1, D2).

4. Gyromètre selon la revendication 3, **caractérisé en ce que** les quatre rubans de détection Coriolis (3, 4, 13, 14) affleurent la fente séparant les deux branches (110, 120) du diapason (100).

5. Gyromètre selon la revendication 3, **caractérisé en ce que** les quatre rubans de détection Coriolis (3, 4, 13, 14) affleurent les flancs usinés des branches (110, 120) opposés à ceux délimitant la fente séparant les deux branches (110, 120) du diapason (100).

6. Gyromètre selon la revendication 4 ou 5, **caractérisé en ce que** le circuit électronique oscillateur (200) comporte une double boucle électronique oscillatrice qui impose sur les deux électrodes d'excitation pilote (E1, E2) respectivement deux potentiels électriques alternatifs en opposition de phase entre eux.

7. Gyromètre selon la revendication 6, **caractérisé en ce que** le diapason (100) et les rubans conducteurs sont sensiblement symétriques par rapport à un plan perpendiculaire (Π) au plan de la plaque et parallèle aux axes longitudinaux des branches.

8. Gyromètre selon la revendication 7, **caractérisé en ce que** le diapason (100) est partie intégrante d'une structure monolithique plane comportant deux parties fixes et sensiblement symétrique par rapport à un axe médian (Δ) contenu dans ledit plan perpendiculaire au plan de la plaque et parallèle aux axes longitudinaux des branches (110, 120).

9. Gyromètre selon la revendication 8, **caractérisé en ce que** lesdites connexions électriques reliant chacun des rubans d'excitation pilote (1, 6) et de détection pilote (2, 5) au ruban disposé en regard sur l'autre face de la plaque (11, 16, 12, 15) sont réalisées au moyen de rubans conducteurs de raccordement électrique (51, 52) et de plages de contact (21, 22) supportés par les deux faces de la plaque et de raccords conducteurs (41, 42, 45, 46) disposés sur les flancs usinés desdites parties fixes, lesdits rubans de raccordement (51, 52) et lesdites plages de contact (21, 22) étant symétriques par rapport audit axe médian (Δ).

10. Gyromètre selon la revendication 9, **caractérisé en ce que** des peignes inter digités (501, 511, 502, 512) sont supportés par les faces desdites parties fixes parallèles au plan de la plaque, chacun desdits peignes inter digités (501, 511, 502, 512) étant disposé entre deux rubans conducteurs de raccordement électrique (51, 52) d'un ruban (1, 6) d'une électrode d'excitation pilote (E1, E2) et d'un ruban (2, 5) d'une électrode de détection pilote (P1, P2) respectivement et ayant des dents connectées électriquement à ladite électrode de détection pilote (P1, P2) et d'autres dents connectées électriquement à l'autre électrode d'excitation pilote (P1, P2).

## Patentansprüche

1. Coriolis-Gyrometer mit einer Stimmgabel (100), die aus einer flachen Platte aus piezoelektrischem Kristall ausgearbeitet ist und gemäß einem Steuermodus und einem Erfassungsmodus schwingt, wobei die zwei Zinken (110, 120) der Stimmgabel (100) Steuererregungselektroden (E1, E2) und Steuererfassungselektroden (P1, P2), die an eine elektronische Oszillatorschaltung (200) angeschlossen sind, die es ermöglicht, den Steuermodus bei Resonanzschwingung aufrechtzuerhalten, und Coriolis-Erfassungselektroden (D1, D2) tragen, die an eine elektronische Erfassungsschaltung (300) für den Erfassungsmodus angeschlossen sind, wobei die Elektroden durch Bandleiter gebildet sind, die von den alleinigen Seiten der Platte getragen und parallel zu den Längsachsen der Zinken (110, 120) angeordnet sind, wobei jede der zur Ebene der Platte jedes der Zinken parallelen Seiten ein Steuererregungsband (1, 6) und ein Steuererfassungsband (2, 5) und ein Coriolis-Erfassungsband (3, 4) trägt, **dadurch gekennzeichnet, dass** für jede der zur Ebene der Platte jedes der Zinken (110,120) parallelen Seiten das Steuererfassungsband (2, 5) zwischen dem Steuererregungsband (1, 6) und dem Coriolis-Erfassungsband (3, 4) angeordnet und an den invertierenden Eingang eines Operationsverstärkers (201, 202) angeschlossen ist, dessen nicht invertierender Eingang an die elektrische Masse der Vorrichtung angeschlossen ist, wobei der Operationsverstärker (201, 202) die aktive elektronische Komponente eines Ladungs- oder Stromverstärkers (210, 220) bildet, der einen Teil der elektronischen Oszillatorschaltung (200) bildet und dazu dient, die Amplitude der Schwingung des Steuermodus zu ertassen..

2. Gyrometer nach Anspruch 1, **dadurch gekennzeichnet, dass** jedes von einer Seite der Platte getragene Steuererregungsband (1, 6), Steuererfassungsband (2, 5) und Coriolis-Erfassungsband (3, 4) einem jeweiligen von der anderen Seite der Platte getragenen Steuererregungsband (11, 16), Steuererfassungsband (12, 15) und Coriolis-Erfassungsband (13, 14) gegenüberliegend angeordnet ist.

3. Gyrometer nach Anspruch 2, **dadurch gekennzeichnet, dass** elektrische Verbindungen jedes Steuererregungsband (1, 6) mit dem Band (11, 16) verbinden, das gegenüberliegend auf der anderen Seite der Platte angeordnet ist, um eine Steuererregungselektrode (E1, E2) zu bilden, jedes Steuererfassungsband (2, 5) mit dem auf der anderen Seite der Platte gegenüberliegenden Band (12, 15) verbinden, um eine Steuererfassungselektrode (P1, P2) zu bilden, und jedes CoriolisErfassungsband (3, 4) mit dem auf derselben Seite der Platte angeordneten Erfassungsband (13, 14) verbinden, um eine Coriolis-Erfassungselektrode (D1, D2) zu bilden.

4. Gyrometer nach Anspruch 3, **dadurch gekennzeichnet, dass** die vier Coriolis-Erfassungsbänder (3, 4, 13, 14) auf gleicher Höhe mit dem die zwei Zinken (110, 120) der Stimmgabel (100) trennenden Spalt liegen.

5. Gyrometer nach Anspruch 3, **dadurch gekennzeichnet, dass** die vier Coriolis-Erfassungsbänder (3, 4, 13, 14) auf gleicher Höhe mit den ausgearbeiteten Flanken der Zinken (110, 120) denjenigen entgegengesetzt liegen, die den die zwei Zinken (110, 120) der Stimmgabel (100) trennenden Spalt begrenzen.

6. Gyrometer nach Anspruch 4 oder 5, **dadurch gekennzeichnet, dass** die elektronische Oszillatorschaltung (200) eine elektronische Oszillatordoppelschleife umfasst, die den zwei Steuererregungselektroden (E1, E2) jeweils zwei zueinander in der Phase entgegengesetzte elektrische Wechselspannungen auferlegt.

7. Gyrometer nach Anspruch 6, **dadurch gekennzeichnet, dass** die Stimmgabel (100) und die Bandleiter in Bezug auf eine zur Ebene der Platte senkrechte (TT) und zu den Längsachsen der Zinken parallele Ebene im Wesentlichen symmetrisch sind.

8. Gyrometer nach Anspruch 7, **dadurch gekennzeichnet, dass** die Stimmgabel (100) ein fester Bestandteil einer ebenen monolithischen Struktur ist, die zwei feststehende und in Bezug auf eine in der zur Ebene der Platte senkrechten und zu den Längsachsen der Zinken (110, 120) parallelen Ebene enthaltenen Mittelachse (Δ), im Wesentlichen symmetrische Teile umfasst.

9. Gyrometer nach Anspruch 8, **dadurch gekennzeichnet, dass** die elektrischen Verbindungen, welche die Steuererregungsbänder (1, 6) und die Steuererfassungsbänder (2, 5) jeweils mit dem auf der anderen Seite der Platte angeordneten Band (11, 16, 12, 15) verbinden, mittels Bandleitern (51, 52) zum elektrischen Anschluss und Kontaktflächen (21, 22), die von den zwei Seiten der Platte getragen sind, und Leiteranschlüssen (41, 42, 45, 46) hergestellt sind, die an den ausgearbeiteten Flanken der feststehenden Teile angeordnet sind, wobei die Anschlussbänder (51, 52) und die Kontaktflächen (21, 22) in Bezug auf die Mittelachse (Δ) symmetrisch sind.

10. Gyrometer nach Anspruch 9, **dadurch gekennzeichnet, dass** verzahnte Kämme (501, 511, 502, 512) von den Seiten der zur Ebene der Platte parallelen, feststehenden Teile getragen sind, wobei jeder der verzahnten Kämme (501, 511, 502, 512) zwischen zwei Bandleitern (51, 52) zum elektrischen Anschluss eines Bands (1,6) einer Steuererregungselektrode (E1, E2) bzw. eines Bands (2, 5) einer Steuererfassungselektrode (P1, P2) angeordnet ist und Zähne, die elektrisch an die Steuererfassungselektrode (P1, P2) angeschlossen sind, und andere Zähne besitzt, die elektrisch an die andere Steuererfassungselektrode (P1, P2) angeschlossen sind.

## Claims

1. Coriolis-effect gyrometer comprising a tuning fork (100) formed in a plane plate of piezoelectric crystal and vibrating in accordance with a drive mode and a detection mode, the two tines (110, 120) of the tuning fork (100) supporting drive excitation electrodes (E1, E2) and drive detection electrodes (P1, P2), which are connected to an electronic oscillator circuit (200) making it possible to maintain the drive mode in resonance vibration, and Coriolis detection electrodes (D1, D2), which are connected to an electronic detection circuit (300) of the detection mode, the electrodes being composed of ribbon conductors supported solely on the faces of the plate and disposed parallel to the longitudinal axes of the tines (110, 120), each of the faces parallel to the plane of the plate of each of the tines supporting a drive excitation ribbon (1, 6) and a drive detection ribbon (2, 5) and a Coriolis detection ribbon (3, 4), **characterised in that**, for each of the faces parallel to the plane of the plate of each of the tines (110, 120), the drive detection ribbon (2, 5) is disposed between the drive excitation ribbon (1, 6) and the Coriolis detection ribbon (3, 4) and is connected to the inverting input of an operational amplifier (201, 202), the non-inverting input of which is connected to the electric ground of the device, said operational amplifier (201, 202) constituting the active electronic component of a charge or current amplifier (210, 220) forming part of the electronic oscillator circuit (200) and serving for detection of the amplitude of vibration of the drive mode.

2. Gyrometer according to claim 1, **characterised in that** each drive excitation (1, 6), drive detection (2, 5) and Coriolis detection (3, 4) ribbon supported by one face of the plate is disposed opposite a drive excitation (11, 16), drive detection (12, 15) and Coriolis detection (13, 14) ribbon, respectively, supported by the other face of the plate.

3. Gyrometer according to claim 2, **characterised in that** electrical connections connect each drive excitation ribbon (1, 6) to the ribbon (11, 16) disposed opposite on the other face of the plate to form a drive excitation electrode (E1, E2), and each drive detection ribbon (2, 5) to the ribbon disposed opposite (12, 15) on the other face of the plate to form a drive detection electrode (P1, P2), and each Coriolis detection ribbon (3, 4) to the ribbon disposed opposite (13, 14) on the other face of the plate to form a Coriolis detection electrode (D1, D2).

4. Gyrometer according to claim 3, **characterised in that** the four Coriolis detection ribbons (3, 4, 13, 14) border the gap separating the two tines (110, 120) of the tuning fork (100).

5. Gyrometer according to claim 3, **characterised in that** the four Coriolis detection ribbons (3, 4, 13, 14) border the formed sides of the tines (110, 120) opposite those delimiting the gap separating the two tines (110, 120) of the tuning fork (100).

6. Gyrometer according to claim 4 or 5, **characterised in that** the electronic oscillator circuit (200) comprises an electronic double-loop oscillator which applies to the two drive excitation electrodes (E1, E2), respectively, two alternating electric potentials in mutual phase opposition.

7. Gyrometer according to claim 6, **characterised in that** the tuning fork (100) and the ribbon conductors are substantially symmetrical relative to a plane perpendicular (TT) to the plane of the plate and parallel to the longitudinal axes of the tines.

8. Gyrometer according to claim 7, **characterised in that** the tuning fork (100) is an integral part of a plane monolithic structure having two fixed parts and substantially symmetrical relative to a medial axis (Δ) contained in said plane perpendicular to the plane of the plate and parallel to the longitudinal axes of the tines (110, 120).

9. Gyrometer according to claim 8, **characterised in that** said electrical connections connecting each of the drive excitation (1, 6) and drive detection (2, 5) ribbons to the ribbon disposed opposite on the other face of the plate (11, 16, 12, 15) are made by means of electrical connection ribbon conductors (51, 52) and contact tabs (21, 22) supported by the two faces of the plate and conductor connections (41, 42, 45, 46) disposed on the formed sides of said fixed parts, said connection ribbons (51, 52) and said contact tabs (21, 22) being symmetrical relative to said medial axis (Δ).

10. Gyrometer according to claim 9, **characterised in that** interdigitated combs (501, 511, 502, 512) are supported by the faces of said fixed parts parallel to the plane of the plate, each of said interdigitated combs (501, 511, 502, 512) being disposed between two ribbon conductors for electrical connection (51, 52) of a respective ribbon (1, 6) of a drive excitation electrode (E1, E2) and ribbon (2, 5) of a drive detection electrode (P1, P2), and having teeth electrically connected to said drive detection electrode (P1, P2) and other teeth electrically connected to the other, drive excitation, electrode (P1, P2).
